# FASCICULE DE BREVET EUROPEEN

(11) **EP 0 343 031 B1**
(45) Date de publication et mention de la délivrance du brevet: **26.05.1993**
(21) Numéro de dépôt: 89401224.4
(22) Date de dépôt: 28.04.1989
(51) Int. Cl.: H04B 1/66

(54) **Procédé et dispositif de compression de spectre pour un signal modulé selon une modulation angulaire d'indice 1/2 et à étalement de spectre par séquence directe**
Verfahren und Anordnung zur Kompression des Spektrums eines winkelmodulierten Signals mit einem Modulationsindex von 1/2 und mit direktem Sequenz-Spreizspektrum
Process and device for compressing the spectrum of an angle-modulated signal having a modulation index equal to 1/2 and using a direct-sequence spread spectrum

(30) Priorité: 10.05.1988 FR 8806283
(43) Date de publication de la demande: 23.11.1989
(73) Titulaire: THOMSON-CSF, 75008 Paris (FR)
(72) Inventeur: Laurent, Pierre André, Cédex 67 F-92045 Paris La Défense (FR); Bruas, Patrick, Cédex 67 F-92045 Paris La Défense (FR)
(74) Mandataire: Lincot, Georges

(56) Documents cités:
- US-A- 4 648 098
- ELECTRONIC DESIGN, vol. 34, no. 8, 3 avril 1986, pages 110-122, Hasbrouck Heights, New Jersey, US; R. ALLAN: "Spread-spectrum rf schemes keep military signals safe"

## Description

L'invention concerne un procédé et un dispositif de compression de spectre, pour un signal modulé selon une modulation angulaire d'indice ½ et à étalement de spectre par séquence directe.

De tels procédé et dispositif sont utilisés notamment dans les modems de faisceaux hertziens réalisant une transmission numérique à modulation angulaire ayant un indice égal à ½, avec un étalement de spectre pseudo-aléatoire par une séquence directe et celui-ci sont par exemple décrits dans le brevet US 4 648 098 ou encore dans l'article de M. R. Allan dans Electronic Design vol 34 n° 8, 3 avril 1986 pages 110-122 ayant pour titre "Spread-spectrum RF schemes keep military signals safe". Ils peuvent être utilisés également dans un récepteur radar pour comprimer le spectre des impulsions reçues, les impulsions étant émises avec une modification angulaire d'indice ½.

Une modulation angulaire est dite d'indice ½ lorsque la variation totale de phase due à un bit donné vaut ¶/2 en valeur absolue. Cette classe de procédés de modulation a la propriété de posséder un spectre en fréquence particulièrement étroit.

Selon l'art antérieur, un démodulateur pour un signal modulé en phase ou en fréquence, et à spectre étalé par séquence directe, comporte un dispositif de compression de spectre par corrélation, qui comporte lui même un modulateur fournissant au moins une porteuse modulée par une séquence pseudo-aléatoire, de manière identique à la modulation réalisée à l'émission pour étaler le spectre. Il y a identité entre la séquence pseudo-aléatoire utilisée pour l'étalement de spectre à l'émission, et la séquence pseudo-aléatoire utilisée pour la compression de spectre à la réception ; et il y a identité entre le type de modulation utilisé à l'émission et le type de modulation utilisé à la réception.

Dans le cas d'un démodulateur pour un signal modulé en phase avec un indice égal à ½, le modulateur incorporé à ce démodulateur fournit deux porteuses en quadrature dont la phase varie de 0° ou de 180° selon la valeur d'une séquence binaire pseudo-aléatoire. On démontre que, pour obtenir un taux d'erreurs binaires minimal, le dispositif de compression, dans le démodulateur, doit multiplier le signal à démoduler, par un signal qui est la réplique conjuguée du signal à démoduler. Ce signal local est constitué lui aussi de deux porteuses en quadrature. Pour obtenir une mise en phase des porteuses locales avec les porteuses du signal à démoduler, une synchronisation est assurée par des boucles à verrouillage de porteuse et à verrouillage de code.

Ainsi, selon l'art antérieur, un dispositif de compression de spectre pour une modulation angulaire à l'étalement de spectre par séquence directe, doit jouer le rôle d'un filtre adapté à la forme d'onde du signal à démoduler. La classe des modulations angulaires à étalement de spectre par séquence directe comporte un grand nombre de modulations. Si le seul critère de choix était la simplicité de réalisation du modulateur et du démodulateur, la modulation choisie serait la modulation MSK-classique. En pratique d'autres contraintes interviennent. Par exemple, dans le cas d'un faisceau hertzien, le choix d'un type de modulation est dicté par le cahier des charges de la liaison à réaliser. Par exemple, pour réaliser une liaison entre un satellite et le sol, avec accès multiple de type FDMA (Accès multiple à division de fréquences), le cahier des charges prévoit : une valeur maximale pour le rayonnement hors bande, un accroissement maximal de la densité d'énergie dans la bande, par rapport à celle de la modulation BPSK émise avec le même débit ; et une valeur maximale des pertes de performances par rapport à la modulation MSK. La nécessite de réduire la consommation électrique du dispositif d'émission, par une réduction de la fréquence d'échantillonnage, peut aussi être une contrainte pour le choix du type de modulation.

Une comparaison entre les performances des diverses modulations angulaires d'indice ½ : BPSK, MSK-classique, OQORC, MSK-Hanning, etc ..., avec pour critères le cahier des charges, conduit à sélectionner un type de modulation qui est souvent autre que la modulation MSK-classique. Par exemple, le cahier des charges peut conduire à choisir la modulation MSK-Hanning, qui est une modulation MSK-classique combinée avec une pondération par une fonction de Hanning. Par conséquent, la réalisation du démodulateur est plus complexe que dans le cas d'une liaison utilisant la modulation MSK-classique, puisque selon l'art antérieur, le démodulateur doit comporter un modulateur MSK-Hanning qui est plus complexe qu'un modulateur MSK-classique.

L'invention s'applique aussi au domaine du radar, car il est possible de moduler les impulsions émises par un radar, selon une modulation angulaire d'indice ½ à étalement de spectre par séquence directe. Les impulsions reçues peuvent être démodulées au moyen d'un corrélateur qui multiplie le signal reçu par un signal identique au signal émis mais décalé de toutes les distances possibles et de tous les effets Doppler possibles. Ce corrélateur réalise une compression de spectre qui a pour effet de raccourcir au maximum la durée de l'impulsion reçue, pour obtenir un plus grand rapport signal à bruit. Un tel corrélateur constitue donc un dispositif de compression par filtrage adapté. Selon l'Art Antérieur, ce dispositif de compression doit comporter un modulateur réalisant une modulation identique à celle de l'émission. Par conséquent, si le type de modulation choisi est une modulation angulaire d'indice ½ et à étalement de spectre par séquence directe, autre que la modulation MSK-classique, la réalisation du démodulateur est plus complexe. D'autre part, il n'est pas possible de changer facilement le type de modulation de fréquence utilisé à l'émission, pour augmenter la résistance au brouillage par exemple, puisqu'il faudrait modifier simultanément le modulateur pour conserver un filtrage adapté.

Le but de l'invention est de remédier aux inconvénients des dispositifs de compression de spectre de type connu. L'objet de l'invention est un dispositif de compression de spectre par filtrage quasi adapté, la désadaptation étant telle que la perte de performances est négligeable, mais permet de simplifier la réalisation du dispositif de compression pour tous les types de modulation angulaire d'indice ½, à spectre étalé par séquence directe, autre que la modulation MSK-classique.

Selon l'invention, un procédé de compression de spectre, pour un signal modulé selon une modulation angulaire d'indice ½, et à spectre étalé par une séquence directe consistant à multiplier un premier signal dont le spectre est à comprimer, par un second signal, est caractérisé en ce qu'il consiste à délivrer le deuxième signal à partir d'un modulateur de type MSK classique avec une forme d'onde différente de celle du premier signal mais telle que sa fonction d'intercorrélation avec le premier signal ait une amplitude peu différente de l'amplitude de la fonction d'auto-corrélation du premier signal.

L'invention a également pour objets un dispositif pour la mise en oeuvre du procédé précité et des utilisations du procédé à la démodulation de signaux MKS-Hanning et à la compression de spectre de signal radar.

L'invention sera mieux comprise et d'autres détails apparaîtront à l'aide de la description ci-dessous et des figures l'accompagnant :
- La figure 1 représente le schéma synoptique d'un exemple de réalisation analogique d'un démodulateur pour modulation MSK-Hanning, à étalement de spectre par séquence directe, comportant un dispositif de compression, selon l'invention ;
- La figure 2 représente le schéma synoptique d'un exemple de réalisation analogique d'un modulateur MSK-Hanning, à étalement de spectre par séquence directe ;
- La figure 3 représente le schéma d'un exemple de réalisation analogique d'un modulateur MSK-classique, à étalement de spectre par séquence directe ;
- La figure 4 représente des graphes illustrant le fonctionnement du dispositif de compression selon l'invention ;
- La figure 5 représente le schéma synoptique d'un exemplaire de réalisation numérique d'un démodulateur pour modulation MSK-Hanning, comportant un dispositif de compression selon l'invention ;
- La figure 6 représente le schéma synoptique plus détaillé d'une partie de cet exemple de réalisation ;
- La figure 7 représente le schéma synoptique d'un exemple de réalisation d'un compresseur d'impulsions pour un signal radar, comportant un dispositif de compression, selon l'invention.

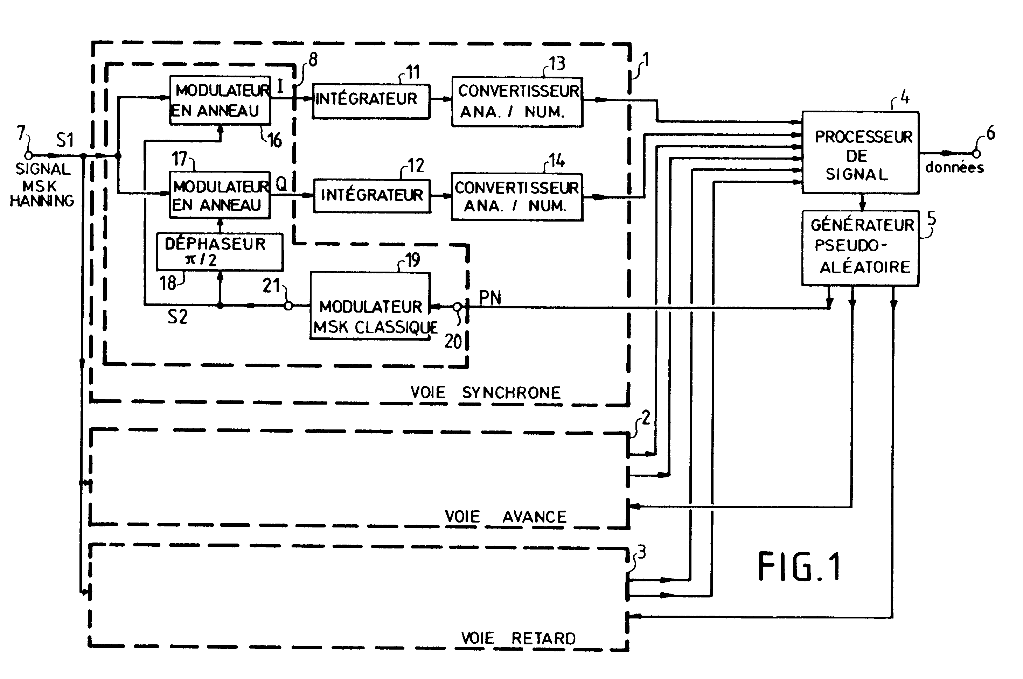

La figure 1 représente un exemple de réalisation analogique, d'un démodulateur pour signal MSK-Hanning, comprenant : une borne d'entrée 7 recevant le signal à démoduler ; une voie 1 dite voie synchrone ; une voie 2 dite voie avance ; une voie 3 dite voie retard ; un processeur de signal 4 ; un générateur de signal binaire pseudo-aléatoire, 5 ; et une borne de sortie 6.

La voie avance et la voie retard, 2 et 3, sont réalisées de manière analogue à la voie synchrone 1. La comparaison des signaux fournis par ces trois voies permet au processeur 4 de synchroniser les porteuses locales sur les porteuses du signal à démoduler, et de synchroniser la séquence pseudo-aléatoire utilisée pour comprimer le spectre du signal à démoduler. La voie synchrone 1 comporte : un dispositif 8 de compression de spectre ; deux intégrateurs analogiques, 11 et 12 ; et deux convertisseurs analogiques-numériques 13 et 14.

La voie synchrone 1 comporte une entrée reliée à la borne d'entrée 7 et fournissant le signal à démoduler à une première entrée du dispositif de compression 8. Ce dernier possède une première et une seconde sortie fournissant respectivement deux signaux I et Q, constitués respectivement de deux porteuses en quadrature, à une entrée de l'intégrateur 11 et à une entrée de l'intégrateur 12 respectivement. Les intégrateurs 11 et 12 possèdent chacun une sortie, reliée respectivement à une entrée du convertisseur 13 et à une entrée du convertisseur 14. Ces derniers ont chacun une sortie reliée respectivement à deux sorties de la voie synchrone 1, qui sont reliées respectivement à une première et à une seconde entrée du processeur de signal 4. Une seconde entrée de la voie synchrone 1, constituée par une seconde entrée du dispositif 8, est reliée à une première sortie du générateur 5 qui lui fournit un signal pseudo-aléatoire noté PN.

La voie avance 2 possède aussi : une entrée reliée à la borne d'entrée 7, une entrée reliée à une deuxième sortie du générateur 5, et deux sorties reliées à respectivement à deux entrées du processeur de signal 4. La voie retard 3 possède aussi : une entrée reliée à la borne d'entrée 7, une entrée reliée à une troisième sortie du générateur 5, et deux sorties reliées à respectivement à deux entrées du processeur 4.

La première, la deuxième et la troisième sortie du générateur 5 fournissent une même séquence binaire pseudo-aléatoire, mais avec un décalage temporel fixé. La seconde sortie fournit une séquence en avance par rapport à la séquence PN que fournit la première sortie ; alors que la troisième sortie fournit une séquence en retard par rapport à la séquence PN que fournit la première sortie. Le générateur 5 fournit ces trois séquences pseudo-aléatoires à un rythme fixé par un signal d'horloge que lui fournit le processeur de signal 4. Le processeur 4 possède une sortie reliée à la borne de sortie 6 du démodulateur et fournissant une suite de valeurs binaires constituée par les données modulant le signal à démoduler. Le processeur de signal 4 peut être constitué, par exemple, par un processeur numérique de type TM32010 commercialisé par Texas Instruments.

Le dispositif 8 de compression de spectre comporte : deux modulateurs en anneau, 16 et 17 ; un déphaseur de ¶/2, 18 ; et un modulateur 19. Selon l'art antérieur, le modulateur 19 est un modulateur MSK-Hanning, alors que, selon l'invention, le modulateur 19 est un modulateur MSK-classique.

Les modulateurs en anneau, 16 et 17, comportent chacun : une première entrée qui est reliée à la première entrée du dispositif 8 ; une sortie constituant respectivement la première et la seconde sortie du dispositif 8 ; et une seconde entrée reliée respectivement à une borne de sortie 21 du modulateur 19 et à une sortie du déphaseur 18. La borne de sortie 21 du modulateur 19 est reliée à une entrée du déphaseur 18. Une borne d'entrée 20 du modulateur 19 constitue la seconde entrée du dispositif de compression 8.

Ainsi, le modulateur 16 et le modulateur 17 reçoivent sur leurs secondes entrées respectivement deux porteuses en quadrature qui sont modulées par le modulateur 19. Les modulateurs en anneau 16 et 17 multiplient le signal à démoduler, par une porteuse modulée angulairement par le signal PN, pour réaliser une compression de spectre inverse de l'étalement de spectre modulant le signal à démoduler.

Selon l'art antérieur, le modulateur 19 doit être un modulateur réalisant une modulation MSK-Hanning. Selon l'invention, le modulateur 19 est un modulateur réalisant une modulation MSK-classique.

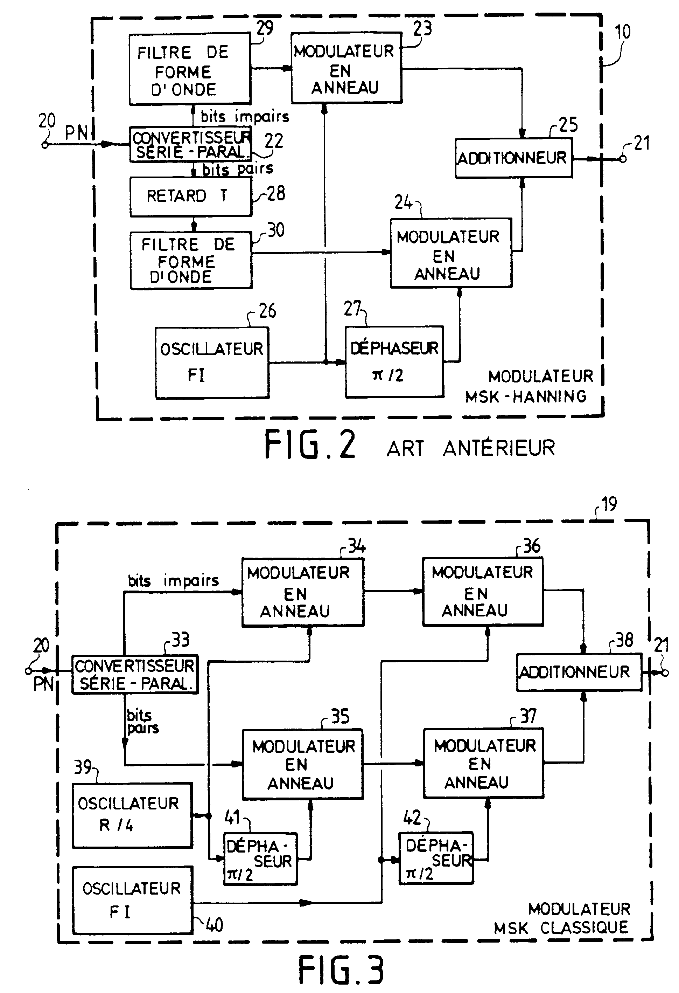

Les figures 2 et 3 mettent en évidence les différences entre la réalisation d'un modulateur 10 réalisant une modulation MSK-Hanning et un modulateur 19 réalisant une modulation MSK-classique.

Sur la figure 2, le schéma synoptique d'un exemple de réalisation analogique d'un démodulateur MSK-Hanning, 10, comporte : un convertisseur série-parallèle, 22 ; deux modulateurs en anneau, 23 et 24 ; un additionneur analogique 25 ; un oscillateur local 26 ; un déphaseur de ¶/2, 27 ; un dispositif à retard, 28, procurant un retard égal à la durée T des bits du signal pseudo-aléatoire PN ; et deux filtres de forme d'onde, 29 et 30.

Le convertisseur 22 a une entrée reliée à une borne d'entrée 20 du modulateur 19a pour recevoir la suite des bits du signal pseudo-aléatoire PN. Il possède deux sorties reliées respectivement à une entrée du filtre 29 et à une entrée du filtre 30, et fournissant respectivement les bits impairs et les bits pairs de la suite des bits du signal pseudo-aléatoire. La sortie du filtre 30 est reliée à une première entrée du modulateur en anneau 24. La sortie du filtre 29 est reliée à une première entrée du modulateur en anneau 23. Les modulateurs en anneau 23 et 24 possèdent chacun une seconde entrée reliée respectivement à une sortie de l'oscillateur local 26 et à une sortie du déphaseur 27. L'entrée du déphaseur 27 est reliée à la sortie de l'oscillateur 26. Les modulateurs 23 et 24 possèdent chacun une sortie reliée respectivement à deux entrées de l'additionneur 25. La sortie de l'additionneur 25 est reliée à la borne de sortie 21 du modulateur 19a. L'oscillateur local 26 fournit une porteuse de fréquence FI égale à la fréquence des deux porteuses du signal à démoduler. L'oscillateur 24 est commandé en phase par le processeur 4 au moyen d'une liaison non représentée sur la figure, pour synchroniser cette porteuse sur l'une des porteuses du signal à démoduler.

Sur la figure 3, le schéma synoptique d'un exemple de réalisation analogique d'un modulateur MSK classique, 19, comporte : un convertisseur série-parallèle, 33 ; quatre modulateurs en anneau : 35 à 37 ; un additionneur analogique 38 ; deux oscillateurs 39 et 40 ; et deux déphaseurs de ¶/2, 41 et 42.

Le convertisseur 33 possède une entrée reliée à la borne d'entrée 20 du modulateur 19a et possède deux sorties reliées respectivement à des premières entrées des modulateurs en anneau 34 et 35. Ces derniers possèdent des secondes entrées reliées respectivement à la sortie de l'oscillateur 39 et à la sortie du déphaseur 41. L'entrée du déphaseur 41 est reliée à la sortie de l'oscillateur 39. Les modulateurs en anneau 36 et 37 possèdent des premières entrées reliées respectivement à des sorties des modulateurs en anneau 34 et 35 ; et possèdent des secondes entrées reliées respectivement à une sortie de l'oscillateur 40 et à une sortie du déphaseur 42. Une entrée du déphaseur 42 est reliée à la sortie de l'oscillateur 40. Les modulateurs 36 et 37 ont chacun une sortie reliée respectivement à deux entrées de l'additionneur 38. La sortie de l'additionneur 38 est reliée à la borne de sortie 21 du modulateur 19b.

L'oscillateur 40 est un oscillateur local ayant une fréquence FI égale à la fréquence des porteuses du signal à démoduler. L'oscillateur 39 a une fréquence quatre fois plus faible que le rythme R du signal pseudo-aléatoire PN. Le convertisseur 33 reçoit la séquence pseudo-aléatoire PN et transmet vers le modulateur 34, et le modulateur 35, respectivement les bits impairs et les bits pairs de cette séquence. Les modulateurs en anneau 34 et 36 font le produit des bits impairs par les porteuses de fréquence R/4 et de fréquence FI, que fournissent respectivement les oscillateurs 39 et 40. Les modulateurs en anneau 35 et 37 font le produit des bits pairs par des porteuses de mêmes fréquences mais en quadrature par rapport aux précédentes. L'additionneur 38 additionne les deux signaux produits pour constituer un signal MSK-classique, à étalement de spectre par séquence directe.

Sur les figures 2 et 3 il apparaît que le remplacement d'un modulateur MSK-Hanning par un modulateur MSK-classique conduit à supprimer : deux filtres de formes d'ondes, 29 et 30 ; et conduit à rajouter : deux modulateurs en anneau, 34 et 35, un déphaseur 41, et un oscillateur 39. En pratique la réalisation des filtres de formes d'ondes 29 et 30 est beaucoup plus complexe que la réalisation des modulateurs en anneau, 34 et 35, du déphaseur 41, et de l'oscillateur 39. Par conséquent, la réalisation d'un démodulateur MSK-Hanning, ou d'un démodulateur pour un autre type de modulation angulaire indice ½, à étalement de spectre, est beaucoup plus simple selon l'invention que selon l'art antérieur. La description qui suit montrera que cette simplification existe aussi dans le cas d'une réalisation avec des composants numériques.

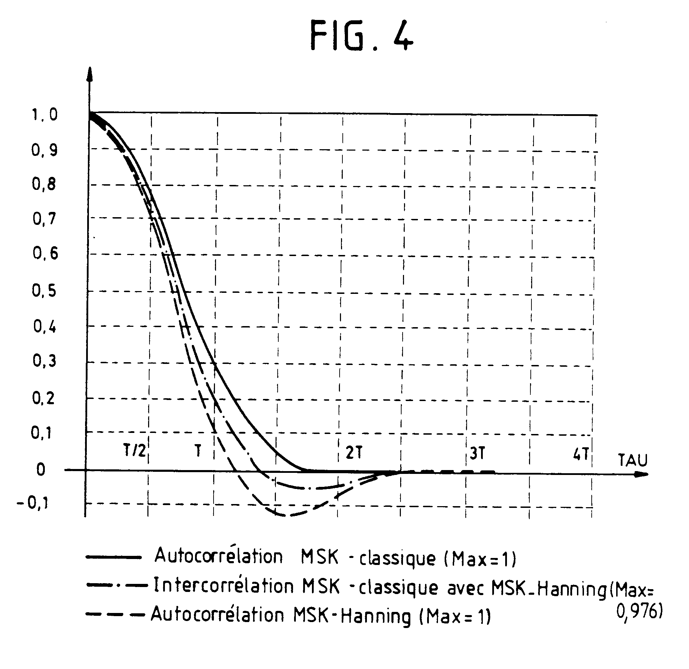

La figure 4 représente des graphes illustrant les performances obtenues au moyen d'un dispositif de compression de spectre selon l'invention. Le dispositif de compression de spectre selon l'invention étant un corrélateur qui détermine les valeurs de la fonction de corrélation du signal à démoduler avec un signal local fourni par un modulateur MSK-classique, il est intéressant de comparer le graphe de cette fonction de corrélation avec le graphe de la fonction de corrélation dont les valeurs seraient calculées dans un dispositif de compression classique utilisant un modulateur MSK-Hanning. Un dispositif de compression classique, pour un signal MSK-Hanning, calcule des valeurs de la fonction d'auto-corrélation d'un signal MSK-Hanning.

La figure 4 représente : en pointillés, le graphe de la fonction d'auto-corrélation d'un signal MSK-Hanning, tel que celui qui est à démoduler ; en traits pleins, la fonction d'auto-corrélation d'un signal MSK-classique ; et en traits mixtes, le graphe de la fonction de corrélation d'un signal MSK-Hanning, tel que le signal à démoduler, avec un signal MSK-classique, tel que le signal fourni par le modulateur 19b dans le démodulateur selon l'invention. Le décalage temporel TAU, qui est en abscisse, a pour unité T, la durée de chaque bit du signal pseudo-aléatoire.

Sur cette figure, il apparaît que le graphe en traits mixtes est compris entre le graphe en traits pleins et le graphe en pointillés ; et que le graphe en pointillés et le graphe en traits mixtes comportent chacun un lobe secondaire négatif, celui du graphe en pointillés étant nettement plus grand que celui du graphe en traits mixtes.

Les pics de corrélation, au sommet de ces graphes, sont pratiquement confondus à 2,3% ou 0,1dB près. La perte de sensibilité du démodulateur selon l'invention, pour un signal MSK-Hanning, par rapport à un démodulateur selon l'art antérieur, est donc négligeable. D'autre part, le démodulateur selon l'invention a pour avantage que le graphe de sa réponse, en traits mixtes, comporte un lobe secondaire d'amplitude inférieure au graphe, en pointillés, d'un démodulateur selon l'art antérieur. Ces lobes secondaires sont gênants car, après élévation au carré, ils sont positifs comme le pic de corrélation intéressant, et peuvent donc provoquer une synchronisation erronée de la séquence pseudo-aléatoire lorsque le seuil de détection du pic de corrélation est réglé à une trop faible valeur. Le fait d'avoir un lobe secondaire d'amplitude plus faible est donc avantageux car cela permet de réduire le risque de synchronisation erronée.

D'une façon plus générale, le dispositif de compression, selon l'invention, peut comprimer le spectre d'un premier signal, modulé selon une modulation angulaire d'indice ½ et à spectre étalé par une séquence directe, en le multipliant par un second signal ayant une forme d'onde différente, appartenant à la classe des modulations angulaires d'indice ½ et à étalement de spectre par séquence directe, à condition que la fonction d'inter-corrélation de ces deux signaux soit peu différente de la fonction auto-corrélation du premier signal. En pratique, le second signal est préférentiellement un signal MSK-classique car il est plus facile de réaliser un modulateur MSK-classique.

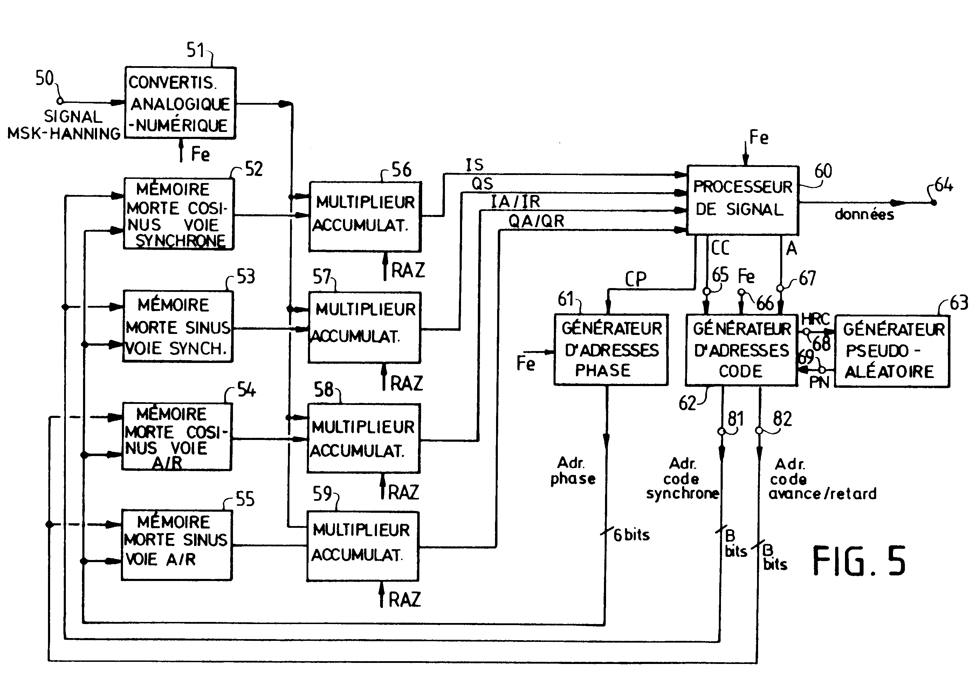

La figure 5 représente le schéma synoptique d'un exemple de réalisation d'un démodulateur pour signal MSK-Hanning à étalement de spectre par séquence directe, constitué de composants numériques. Ce schéma correspond à la fois à un démodulateur selon l'art antérieur, mais aussi à un démodulateur selon l'invention, la différence portant sur la capacité de certaines mémoires et sur le nombre de bits de certains bus. Ce démodulateur comporte : une borne d'entrée 50 ; un convertisseur analogique-numérique 51 ; quatre mémoires mortes 52 à 55, contenant des valeurs d'échantillons définissant des formes d'ondes ; quatre multiplieurs-accumulateurs numériques, 56 à 59 ; un processeur de signal 60 ; deux générateurs d'adresses, 61 et 62 ; un générateur 63 de signal binaire pseudo-aléatoire ; et une borne de sortie 64.

Comme le mode de réalisation analogique, le mode de réalisation numérique comporte trois voies : une voie synchrone, une voie avance, et une voie retard, qui permettent au processeur de signal 60 de synchroniser la séquence pseudo-aléatoire locale avec la séquence pseudo-aléatoire ayant été utilisée pour étaler le spectre. Dans le mode de réalisation numérique, chaque voie comporte une mémoire morte dite cosinus et une mémoire morte dite sinus, permettant de synthétiser respectivement deux ondes porteuses en quadrature. D'autre part, chaque voie comporte deux multiplieurs-accumulateurs correspondant respectivement aux deux porteuses. Cependant la voie avance et la voie retard comportent une mémoire sinus commune 55 et une mémoire cosinus commune 54 et deux multiplieurs-accumulateurs communs, 58 et 59, dont le fonctionnement est multiplexé temporellement.

Dans cet exemple de réalisation, le dispositif de compression de spectre comprend essentiellement les mémoires mortes 52 à 55. Ces dernières fournissent des suites de valeurs d'échantillons permettant de reconstituer deux porteuses en quadrature pour la voie synchrone, deux porteuses en quadrature pour la voie avance, et deux porteuses en quadrature pour la voie retard. Chaque couple de porteuses constitue un signal local complexe. Le contenu des mémoires 52 à 55 détermine le type de modulation modulant ces 3 signaux locaux. Le nombre d'échantillons stockés dans chaque mémoire dépend du type de la modulation des signaux locaux à produire, car le nombre d'échantillons dépend de la longueur de la forme d'onde à produire, relativement à la durée T de chaque bit de la séquence pseudo-aléatoire.

Le convertisseur analogique-numérique 51 possède une entrée reliée à la borne d'entrée 50 pour recevoir le signal à démoduler. Une entrée du convertisseur 51 reçoit un signal d'horloge d'échantillonnage Fₑ fourni par un générateur de signaux d'horloge, classique, non représenté sur la figure. Une sortie du convertisseur 51 est reliée à une première entrée des multiplieurs-accumulateurs 56 à 59 pour leur fournir une suite de valeurs numériques correspondant aux échantillons du signal à démoduler. Les multiplieurs-accumulateurs 56 à 59 possèdent chacun une entrée reliée respectivement à des sorties des mémoires mortes 52 à 55. Les mémoires mortes 52 et 53 possèdent des premières entrées reliées à une borne de sortie 81 du générateur d'adresses 62 pour recevoir une première partie d'adresse appelée adresse code synchrone ; et possèdent des secondes entrées reliées à une sortie du générateur 61 pour recevoir une seconde partie d'adresse appelée adresse phase. Les mémoires 54 et 55 possèdent des premières entrées reliées à une borne de sortie 82 du générateur d'adresses 62 pour recevoir une première partie d'adresse dite code avance/retard ; et possèdent des secondes entrées reliées à la sortie du générateur 61 pour recevoir une seconde partie d'adresse appelée adresse phase.

Les multiplieurs-accumulateurs 56 à 59 possèdent chacun une sortie reliée respectivement à une entrée du processeur de signal 60 pour lui fournir respectivement des signaux IS et QS correspondant à la voie synchrone, et des signaux IA/IR, QA/QR, correspondant alternativement à la voie avance et la voie retard. Le processeur de signal 60 possède une entrée de commande recevant le signal d'horloge d'échantillonnage Fₑ ; une sortie reliée à une entrée du générateur 61 et lui fournissant un signal logique CP dit de correction de phase ; une sortie reliée à une borne d'entrée 65 du générateur 62 pour lui fournir un signal logique CC dit de correction de code ; une sortie reliée à une borne d'entrée 67 du générateur 62 pour lui fournir un signal logique A commandant le multiplexage temporel dans la voie avance/retard ; et une sortie reliée à la borne de sortie 64 du démodulateur, pour fournir les données extraites du signal à démoduler.

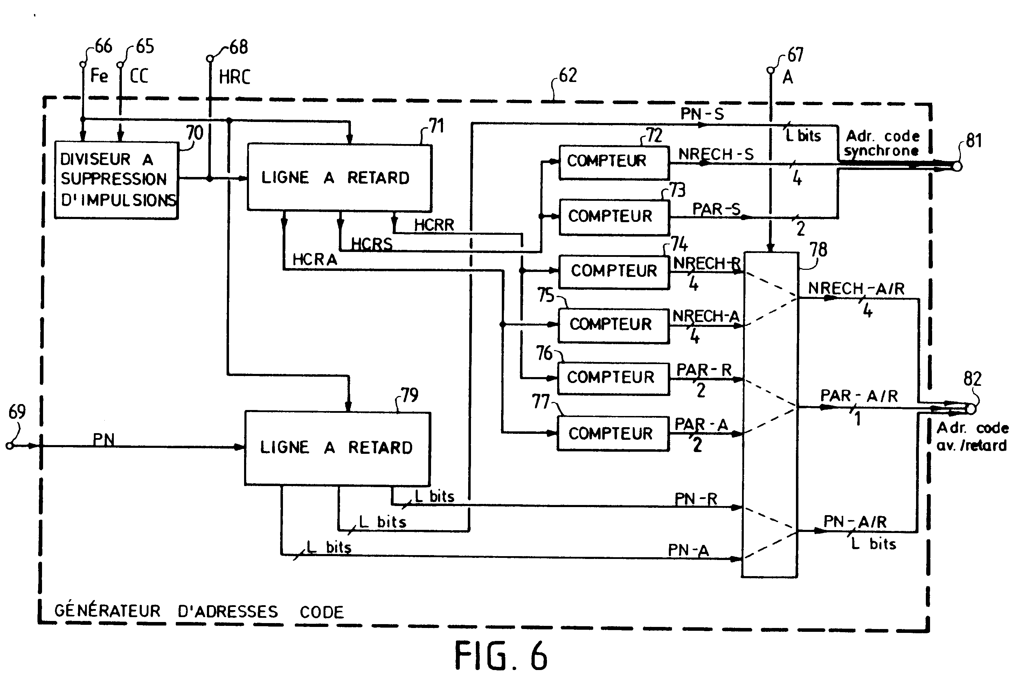

Le générateur de signal binaire pseudo-aléatoire, 63, possède une entrée d'horloge reliée à une sortie du générateur 62 pour recevoir un signal d'horloge HRC qui fixe le rythme des bits du signal pseudo-aléatoire ; et possède une sortie reliée à une entrée du générateur 62 pour lui fournir le signal binaire pseudo-aléatoire PN. Le générateur 61 possède une entrée recevant le signal d'horloge d'échantillonnage Fₑ. Le générateur 61 est constitué classiquement d'un additionneur-accumulateur. Le générateur 62 est réalisé d'une manière classique conformément au schéma synoptique représenté sur la figure 6 et qui sera décrit dans ce qui suit. Le générateur 63 est un générateur classique de signal binaire pseudo-aléatoire. Le processeur de signal 60 est constitué, par exemple, par un circuit intégré de type TM32010 commercialisé par Texas Instruments.

L'adresse phase est constituée par six bits alors que l'adresse code synchrone et l'adresse code avance/retard sont constituées chacune de B bits. Le nombre B, ainsi que la capacité correspondante dans les mémoires 52 à 55, dépendent de la forme d'onde à stocker dans ces mémoires, c'est-à-dire dépendent du type de modulation utilisée dans le démodulateur pour créer un signal local à corréler avec le signal à démoduler. Plus précisément, le nombre de bits de l'adresse code est égal à 11+L où L est égal à la longueur de la forme d'onde du signal local, cette longueur ayant pour unité la durée T d'un bit du signal pseudo-aléatoire. Si, conformément à l'art antérieur, le signal local est un signal de type MSK-Hanning, L est égale à quatre bits. D'une manière plus générale, la longueur de toutes les formes d'ondes des modulations angulaires d'indice ½ à étalement de spectre par séquence, est au moins égale à 4 bits, sauf celle de la modulation MSK-classique qui est égale à 2 bits.

Si, conformément à l'invention, le signal local est de type MSK-classique, la longueur L est égale à deux bits. Il y a donc une réduction de deux bits dans l'adresse code, pour la voie synchrone comme pour la voie avance/retard, dans le dispositif selon l'invention. Cette réduction de deux bits correspond à une réduction, de quatre fois, de la capacité des mémoires mortes stockant les formes d'onde. Par exemple la capacité de chacune de ces mémoires est réduite de 32 kilo-octets à 8 kilo-octets chacune. Cette réduction de capacité simplifie et rend moins coûteuse la réalisation du démodulateur.

La figure 6 représente le schéma synoptique du générateur 62 fournissant les adresses code. Ce schéma synoptique est connu, seul diffère de l'art antérieur le nombre de bits de certains bus, à cause du remplacement des formes d'onde de type MSK-Hanning, par des formes d'ondes du type MSK-classique. Cet exemple de réalisation comporte : un diviseur 70 à suppression d'impulsions ; deux lignes à retard 71 et 79 ; six compteurs, 72 à 77 ; et un multiplexeur à six entrées et trois sorties, 78.

Le diviseur 70 possède : une entrée d'horloge reliée à la borne d'entrée 66 pour recevoir le signal d'horloge d'échantillonnage Fₑ , et une entrée de commande de correction reliée à la borne d'entrée 65 pour recevoir le signal binaire CC. Ce dernier commande une correction de la fréquence du signal fourni par le diviseur 70, en supprimant ou en ajoutant une impulsion à la suite des impulsions obtenues en divisant la fréquence d'échantillonnage par un nombre entier. Une sortie du diviseur 70 fournit le signal d'horloge HRC résultant de cette division et de cette correction. Ce signal d'horloge HRC est fourni à la borne de sortie 68 et à une entrée de données de la ligne à retard 71.

La ligne à retard 71 possède une entrée d'horloge reliée à la borne d'entrée 66 pour recevoir le signal d'horloge d'échantillonnage Fₑ . Elle possède trois sorties correspondant à trois retards différents et fixés, le retard de valeur intermédiaire correspondant à la voie synchrone, le retard le plus grand à la voie retard, et le retard le plus petit correspondant à la voie avance. Ces trois sorties fournissent respectivement des signaux d'horloge appelés HCRS, HCRR, et HCRA. Le signal d'horloge correspondant à la voie retard, HCRR, est appliqué à des entrées d'horloge des compteurs 74 et 76. Le signal d'horloge correspondant à la voie synchrone, HCRS, est appliqué à des entrées d'horloge des compteurs 72 et 73. Le signal d'horloge correspondant à la voie avance, HCRA, est appliqué à des entrées d'horloge des compteurs 75 et 77.

La ligne à retard 79 possède une entrée de données reliée à la borne d'entrée 69 pour recevoir la suite des bits du signal pseudo-aléatoire PN, une entrée d'horloge reliée à la borne d'entrée 66 pour recevoir le signal d'horloge d'échantillonnage, et trois sorties correspondant à trois retards différents et fixés. Une sortie correspondant à la voie synchrone est reliée à la borne de sortie 81 du générateur 62 et lui fournit un mot binaire de L bits, noté PN-S. Une sortie correspondant à la voie retard fournit un mot binaire de L bits, noté PN-R, à une première entrée du multiplexeur 78. Une sortie de la ligne à retard 79 fournit un mot binaire de L bits, PN-A, à une seconde entrée du multiplexeur 78. Le multiplexeur 78 transmet alternativement les mots binaires appliqués sur sa première et sa seconde entrée vers une première sortie reliée à la borne de sortie 82, qui fournit une adresse code avance/retard.

Une sortie du compteur 72 fournit un mot binaire de quatre bits, NRECH-S, à la borne de sortie 81. Ce mot binaire correspond au numéro d'échantillon du signal à démoduler, compté pour la voie synchrone. Une sortie du compteur 73 fournit à la borne de sortie 81 un mot binaire de deux bits, dit de parité, PAR-S, correspondant à la voie synchrone. Une sortie du compteur 74 fournit à une troisième entrée du multiplexeur 78 un mot binaire de quatre bits, NRECH-R, égal au numéro d'échantillon du signal à démoduler, compté pour la voie retard. Une sortie du compteur 75 fournit à une quatrième entrée du multiplexeur 78 un mot binaire de quatre bits, NRECH-A, égal au numéro d'échantillon du signal à démoduler, compté pour la voie avance. Le multiplexeur 78 transmet alternativement ces deux mots binaires à une seconde sortie qui est reliée à la borne de sortie 82.

Une sortie du compteur 76 fournit à une cinquième entrée du multiplexeur 78, un mot binaire de deux bits, PAR-R, dit de parité, correspondant à la voie retard. Une sortie du compteur 77 fournit à une sixième entrée du multiplexeur 78, un mot binaire de deux bits, PAR-A, dit de parité, correspondant à la voie avance. Le multiplexeur 78 transmet alternativement ces deux mots binaires à une troisième sortie qui est reliée à la borne de sortie 82. Au total, la borne de sortie 82 fournit (5+L) bits qui constituent une adresse code avance/retard. Le multiplexeur 78 possède une entrée de commande reliée à la borne d'entrée 67 pour recevoir le signal A commandant le multiplexage.

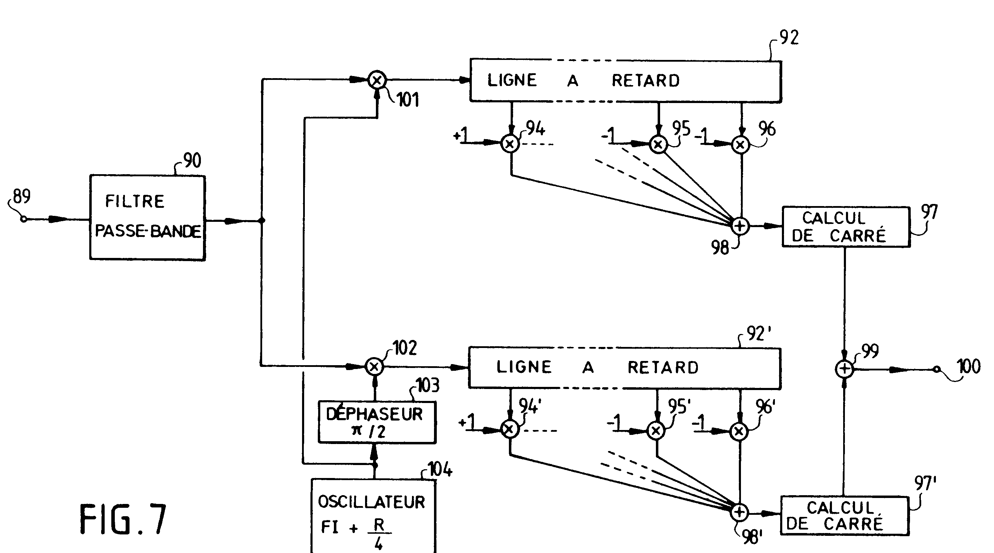

La figure 7 représente le schéma synoptique d'un exemple de réalisation d'un dispositif de compression selon l'invention, appliqué au domaine du radar. Ce dispositif est destiné à comprimer le spectre d'un signal renvoyé par une cible, et à déterminer un signal de corrélation, à la suite de l'émission d'une impulsion radar modulée selon une modulation angulaire et ayant un spectre étalé par une séquence pseudo-aléatoire fixe ou variable. Dans cet exemple de réalisation, le signal local est un signal de fréquence fixée, mais le signal résultant de la multiplication du signal à démoduler et du signal local est filtré au moyen d'un filtre transverse dont les coefficients sont égaux aux valeurs de la séquence pseudo-aléatoire d'étalement. Tout se passe comme si le signal à démoduler était multiplié par un signal local modulé selon une modulation angulaire d'indice ½, à étalement de spectre par séquence directe, et ayant une fonction d'inter-corrélation avec le signal à démoduler, peu différente de la fonction d'auto-corrélation du signal à démoduler.

Cet exemple de réalisation comporte : une borne d'entrée 89 reliée à une sortie d'un récepteur radar ; un filtre passe-bande 90, dont la fréquence centrale est égale à la fréquence porteuse du signal fourni par le récepteur radar ; deux modulateurs en anneau 101 et 102 ; un déphaseur de ¶/2, 103 ; un oscillateur local 104, de fréquence FI+R/4, ou bien FI-R/4, où FI est la fréquence porteuse du signal appliqué à la borne d'entrée 89 et où R est le rythme des bits du signal pseudo-aléatoire d'étalement de spectre ; deux lignes à retard identiques, 92 et 92' ; un premier ensemble de multiplieurs analogiques 94, 95, ..., 96 ; un second ensemble de multiplieurs analogiques, 94', 95', ..., 96', deux additionneurs analogiques, 98 et 98' ; deux dispositifs de calcul de carré, 97 et 97' ; un additionneur analogique 99 ; et une borne de sortie 100, fournissant la valeur d'un signal de corrélation du signal reçu avec le signal produit localement et qui correspond au signal attendu.

Ce dispositif de compression ne réalise pas de verrouillage de code comme les deux dispositifs décrits précédemment, car les impulsions radars ont une durée très courte qui ne permet pas ce verrouillage. Il n'y a donc qu'une voie au lieu de trois voies de réception.

La borne d'entrée 89 est reliée à une première entrée des modulateurs en anneau 101 et 102, par l'intermédiaire du filtre passe-bande 90 qui élimine les fréquences éloignés de la fréquence porteuse du signal reçu. Les modulateurs en anneau 101 et 102 possèdent des secondes entrées reliées respectivement à une sortie de l'oscillateur 104 et à une sortie du déphaseur 103. L'entrée du déphaseur 103 est reliée à la sortie de l'oscillateur 104. Les sorties des modulateurs en anneau 101 et 102 sont reliées respectivement à une entrée de données de la ligne à retard 92 et à une entrée de données de la ligne à retard 92'. Ces dernières possèdent un nombre d'étages qui est égal au nombre des bits de la séquence pseudo-aléatoire multiplié par le nombre d'échantillons par bit pseudo-aléatoire. De même, le nombre de multiplieurs 94, 95, ..., 96 et le nombre de multiplieurs 94', ..., 96' sont égaux au nombre d'étages.

Chacun des multiplieurs 94, ..., 96 possède une première entrée reliée respectivement à une sortie intermédiaire de la ligne à retard 92 ; possède une seconde entrée recevant une valeur +1 ou -1 ; et possède une sortie reliée à une entrée de l'additionneur 98. De même chacun des multiplieurs 94', ..., 96' possède une première entrée reliée respectivement à une sortie intermédiaire de la ligne à retard 92' ; possède une seconde entrée recevant une valeur +1 ou une valeur -1 ; et possède une sortie reliée à une entrée de l'additionneur 98'. Ces éléments constituent deux filtres adaptés à une séquence pseudo-aléatoire donnée. Si la séquence pseudo-aléatoire est variable à chaque impulsion radar, les valeurs +1 et -1 appliquées aux secondes entrées des multiplieurs sont modifiées entre chaque impulsion radar.

Les multiplieurs 98 et 98' ont chacun une sortie reliée respectivement à une entrée du dispositif 97 de calcul de carré et à une entrée du dispositif 97' de calcul de carré. Ces dispositifs de calcul ont des sorties reliées à des entrées de l'additionneur 99. La sortie de l'additionneur 99 est reliée à la borne de sortie 100 et fournit l'amplitude de la fonction de corrélation du signal reçu, avec le signal produit localement par l'oscillateur 104 et par la séquence pseudo-aléatoire que constitue les valeurs +1 et -1 appliquées aux multiplieurs 94 à 96 et 94' à 96'.

Puisque le dispositif de compression selon l'invention convient pour toutes les modulations angulaires d'indice ½, il est possible de modifier la forme d'onde du signal émis par le radar sans modifier le dispositif de compression du signal reçu, pour une séquence pseudo-aléatoire fixée et pour une valeur fixée FI de la fréquence porteuse du signal appliqué à la borne d'entrée 89. Il est donc facile d'augmenter la résistance au brouillage et la discrétion du signal radar en variant le type de modulation utilisé à l'émission, tout en conservant une modulation du type modulation angulaire d'indice ½, sans avoir à modifier le dispositif de compression d'impulsion dans le récepteur.

D'autre part, il est à la portée de l'homme de l'Art de réaliser un dispositif de compression dans lequel les valeurs +1 et les valeurs -1 appliquées aux multiplieurs sont changées pour chaque impulsion radar afin d'utiliser une séquence pseudo-aléatoire d'étalement différente pour l'émission de chaque impulsion radar. Le filtre passe-bande 90 et les autres composants du dispositif sont de réalisation classique et à la portée de l'Homme de l'Art.

La réalisation de ce dispositif de compression, au moyen de composants numériques et aussi à la portée de l'Homme de l'Art. Les composants peuvent être analogues à ceux utilisés pour l'exemple de réalisation représenté sur la figure 5.

## Revendications

1. Procédé de compression de spectre, pour la démodulation d'un signal modulé selon une modulation angulaire d'indice ½, et à spectre étalé par une séquence directe consistant à multiplier un premier signal (S₁) dont le spertre est à comprimer, par un second signal (S₂), caractérisé en ce qu'il consiste à délivrer le deuxième signal à partir d'un modulateur de type MSK classique avec une forme d'onde différente de celle du premier signal mais telle que sa fonction d'intercorrélation avec le premier signal (S₁) ait une amplitude peu différente de l'amplitude de la fonction d'auto-corrélation du premier signal (S₁).

2. Procédé selon la revendication 1, caractérisé en ce que le deuxième signal (S₂) possède une enveloppe dont le graphe est périodique et forme une arche de sinusoïde ayant une durée correspondant à deux bits de la séquence d'étalement.

3. Utilisation du procédé selon l'une quelconque des revendications 1 et 2 à la démodulation numérique de signaux MSK-Hanning.

4. Utilisation du procédé selon l'une quelconque des revendications 1 et 2 à la compression du spectre d'un signal radar réfléchi par une cible modulé selon une modulation angulaire d'indice ½ et à spectre étalé.

5. Dispositif de compression de spectre, pour un signal modulé selon une modulation angulaire d'indice ½, et à spectre étalé par une séquence directe, comportant deux modulateurs en anneaux (16, 17) couplés respectivement l'un directement à la sortie d'un modulateur MSK (19) l'autre à la sortie du modulateur MSK (19) par l'intermédiaire d'un déphaseur de ¶/2 (18) pour multiplier un premier signal (S₁) dont le spectre est à comprimer, par un second signal (S₂) fourni par le modulateur MSK (19), caractérisé en ce que le modulateur MSK de type classique (19) est couplé sur son entrée à un générateur de séquence pseudo-aléatoire (5) et comporte un convertisseur série parallèle (33) pour convertir la séquence pseudo-aléatoire en bits pairs et impairs, un premier et un deuxième modulateur en anneaux (34, 35) pour multiplier respectivement les bits pairs et impairs de la séquence pseudo-aléatoire par un premier et un deuxième signal de rythme R quatre fois plus faible que celui de la séquence pseudo-aléatoire et déphasés de ¶/2 l'un par rapport à l'autre, un troisième et un quatrième modulateur en anneau (36, 37) couplés respectivement à la sortie des premier et deuxième (34, 35) modulateurs en anneau pour multiplier les signaux obtenus en sortie des premier et deuxième (34, 35) modulateurs en anneau respectivement par un premier et un deuxième signal de fréquence égale à la fréquence porteuse du signal modulé et déphasés l'un par rapport à l'autre de ¶/2, ainsi qu'un circuit additionneur (38) couplé en sortie des troisième et quatrième modulateurs en anneau (36, 37), le second signal (S₂) étant obtenu à la sortie du circuit additionneur (38).

## Claims

1. A spectrum compression process, for demodulating an angle-modulated signal having a modulation index of ½ and with a spectrum spread by a direct sequence consisting of multiplying a first signal (S₁), the spectrum of which is to be compressed, by a second signal (S₂), characterised in that it consists of delivering the second signal from a conventional MSK-type modulator with a wave-form differing from that of the first signal but such that its function of intercorrelation with the first signal (S₁) has an amplitude differing little from the amplitude of the autocorrelation function of the first signal (S₁).

2. A process according to Claim 1, characterised in that the second signal (S₂) has an envelope, the graph of which is periodic and forms a sinusoidal arc having a duration corresponding to two bits of the spreading sequence.

3. The use of the process according to any one of Claims 1 and 2 with digital demodulation of MSK-Hanning signals.

4. The use of the process according to any one of Claims 1 and 2 with compression of the spectrum of an angle-modulated radar signal with modulation index of ½ and spread spectrum reflected by a target.

5. A spectrum compression device, for an angle-modulated signal with modulation index of ½ and with spectrum spread by a direct sequence, comprising two ring modulators (16, 17) coupled, respectively, one direct to the output of an MSK modulator (19), the other to the output of the MSK modulator (19) via a ¶/2 phase converter (18) for multiplying a first signal (S₁), the spectrum of which is to be compressed, by a second signal (S₂) supplied by the MSK modulator (19), characterised in that the MSK modulator of conventional type (19) is coupled at its input to a pseudo-random sequence generator (5) and comprises a serial-parallel converter (33) to convert the pseudo-random sequence into even and odd bits, a first and a second ring modulator (34, 35) to multiply respectively the even and odd bits of the pseudo-random sequence by a first and a second timing signal R four times weaker than that of the pseudo-random sequence and out-of-phase by ¶/2 relative to each other, a third and a fourth ring modulator (36, 37) coupled respectively at the output of the first and second (34, 35) ring modulators to multiply the signals obtained at the outputs of the first and second (34, 35) ring modulators respectively by a first and a second signal with a frequency equal to the carrier frequency of the modulated signal and out-of-phase relative to each other by ¶/2, and also an adder circuit (38) coupled at the outputs of the third and fourth ring modulators (36, 37), the second signal (S₂) being obtained at the output of the adder circuit (38).

## Patentansprüche

1. Verfahren zur Spektrumskompression für die Demodulation eines Signals, das mit einer Winkelmodulation vom Index 1/2 moduliert ist und ein in direkter Folge verbreitertes Spektrum besitzt, wobei das Verfahren die Multiplikation eines ersten Signals (S₁), dessen Spektrum zu komprimieren ist, mit einem zweiten Signal (S₂) umfaßt, dadurch gekennzeichnet, daß es die Lieferung des zweiten Signals von einem herkömmlichen Modulator vom MSK-Typ umfaßt, wobei die Wellenform des zweiten Signals von derjenigen des ersten Signals verschieden ist, jedoch dessen Interkorrelationsfunktion mit dem ersten Signal (S₁) eine Amplitude besitzt, die sich von der Amplitude der Autokorrelationsfunktion des ersten Signals (S₁) wenig unterscheidet.

2. Verfahren gemäß Anspruch 1, dadurch gekennzeichnet, daß das zweite Signal (S₂) eine Hüllkurve besitzt, deren Graph periodisch ist und einen sinusförmigen Bogen mit einer Dauer, die zwei Bits der Verbreiterungsfolge entspricht, bildet.

3. Anwendung des Verfahrens gemäß einem der Ansprüche 1 und 2 auf die digitale Demodulation von MSK-Hanning-Signalen.

4. Anwendung des Verfahrens gemäß einem der Ansprüche 1 und 2 auf die Kompression des Spektrums eines von einem Ziel reflektierten Radarsignals, das mit einer Winkelmodulation vom Index 1/2 moduliert ist und ein verbreitertes Spektrum besitzt.

5. Einrichtung zur Spektrumskompression für ein Signal, das mit einer Winkelmodulation vom Index 1/2 moduliert ist und ein in direkter Folge verbreitertes Spektrum besitzt, mit zwei Gegentaktmodulatoren (16, 17), von denen einer direkt mit dem Ausgang eines MSK-Modulators (19) und der andere über einen π/2-Phasenschieber (18) mit dem Ausgang des MSK-Modulators (19) verbunden ist, um ein erstes Signal (S₁), dessen Spektrum komprimiert werden soll, mit einem vom MSK-Modulator (19) gelieferten zweiten Signal (S₂) zu multiplizieren, dadurch gekennzeichnet, daß der MSK-Modulator (19) vom herkömmlichen Typ an seinem Eingang mit einem Pseudozufallsfolgen-Generator (5) verbunden ist und versehen ist mit einem Seriell/Parallel-Wandler (33), um die Pseudozufallsfolge in geradzahlige und ungeradzahlige Bits umzuwandeln, einem ersten und einem zweiten Gegentaktmodulator (34, 35), um die geradzahligen Bits bzw. die ungeradzahligen Bits der Pseudozufallsfolge mit einem ersten bzw. mit einem zweiten Signal zu multiplizieren, deren Takt R viermal kleiner als derjenige der Pseudozufallsfolge ist und die zueinander um π/2 phasenverschoben sind, einem dritten und einem vierten Gegentaktmodulator (36, 37), die mit dem Ausgang des ersten bzw. des zweiten (34, 35) Gegentaktmodulators verbunden sind, um die am Ausgang des ersten und des zweiten (34, 35) Gegentaktmodulators erhaltenen Signale mit einem ersten bzw. mit einem zweiten Signal zu multiplizieren, deren Frequenz gleich der Trägerfrequenz des modulierten Signals ist und die zueinander um π/2 phasenverschoben sind, sowie mit einer Addiererschaltung (38), die mit dem Ausgang des dritten und des vierten Gegentaktmodulators (36, 37) verbunden ist, wobei das zweite Signal (S₂) am Ausgang der Addiererschaltung (38) erhalten wird.
